(19) **Europäisches Patentamt**

**European Patent Office**

**Office européen des brevets**

(11) Veröffentlichungsnummer : **0 253 816 B1**

(12) **EUROPÄISCHE PATENTSCHRIFT**

(45) Veröffentlichungstag der Patentschrift :
**17.04.91 Patentblatt 91/16**

(21) Anmeldenummer : **86902322.6**

(22) Anmeldetag : **09.04.86**

(86) Internationale Anmeldenummer :
**PCT/DE86/00153**

(87) Internationale Veröffentlichungsnummer :
**WO 86/07142 04.12.86 Gazette 86/26**

(51) Int. Cl.⁵ : **G01C 21/00, G05D 1/02**

(54) **NAVIGATIONSVERFAHREN FÜR FAHRZEUGE.**

(30) Priorität : **30.05.85 DE 3519277**

(43) Veröffentlichungstag der Anmeldung :
**27.01.88 Patentblatt 88/04**

(45) Bekanntmachung des Hinweises auf die
Patenterteilung :
**17.04.91 Patentblatt 91/16**

(84) Benannte Vertragsstaaten :
**DE FR GB IT SE**

(56) Entgegenhaltungen :
**WO-A-85/05474**
**DE-A- 3 319 207**
**FR-A- 2 375 579**
**GB-A- 2 014 309**

(73) Patentinhaber : **ROBERT BOSCH GMBH**
**Postfach 50**
**W-7000 Stuttgart 1 (DE)**

(72) Erfinder : **DÖBEREINER, Klaus**
**Roter Bühl 7**
**W-8671 Kirchenlamitz (DE)**
Erfinder : **KANZLER, Ulrich**
**Henweg 3**
**W-7504 Stein (DE)**
Erfinder : **RAUCH, Hans**
**Distelweg 11**
**W-8510 Fürth 9 (DE)**

## Beschreibung

### Stand der Technik

Die Erfindung geht aus von einem Navigationsverfahren für Fahrzeuge mit einer Anzeigevorrichtung nach der Gattung des Hauptanspruchs.

Bei einem bekannten Navigationssystem nach der DE-OS 33 19 207 werden vor Fahrtantritt über eine Eingabevorrichtung die Daten verschiedener Fahrziele in einen Speicher eingegeben und dann das nächste anzufahrende Ziel aufgerufen. Über eine Koppelnavigation wird während der Fahrt fortlaufend der augenblickliche Standort des Fahrzeugs ermittelt und daraus die jeweilige Entfernung und Richtung zum aufgerufenen Fahrziel angezeigt. Beim Erreichen des Fahrziels können alle während der Fahrt aufgetretenen Navigationsfehler durch Drücken einer Korrekturtaste eliminiert werden, so daß für das nachfolgend aufgerufene Fahrziel die Koppelnavigation wieder von korrekten Ausgangskoordinaten ausgehen kann.

Bei dieser Lösung ist nachteilig, daß die von dem Koppelnavigationssystem verursachten Systemfehler bei den nachfolgenden Fahrten ständig wieder in gleichem Umfang auftreten. Eine einmal vorhandene, durch das Koppelnavigationssystem bedingte Ungenauigkeit kann damit zwar festgestellt aber nicht behoben werden. Dies gilt auch für Fehler, die durch Änderungen der Reifengröße, des Profils Reifendrucks, Beladung und Deklination, sowie durch zeitlich sich ändernde Magnet-Störfelder auftreten.

Aus der FR-A 2 375 579 ist ein Navigationsgerät bekannt, bei dem bei Erreichen eines vorgegebenen Fahrzieles dessen geographische Koordinaten eingegeben werden. Diese Koordinaten werden mittels eines Rechners mit aus Kurs und Geschwindigkeit des Fahrzeugs ermittelten Koordinaten für dieses Fahrziel verglichen. Aus der Abweichung wird ein Korrekturfaktor ermittelt, der der weiteren Koppelnavigation zugrunde gelegt wird. Dabei erscheint ungünstig, daß für die geplante Fahretappe stets mit dem gleichen Korrekturfaktor gerechnet wird, der für die letzte Fahretappe ermittelt wurde.

Der Erfindung liegt die Aufgabe zugrunde, ein Navigationsverfahren für Landfahrzeuge zu schaffen, bei dem die Genauigkeit des Koppelnavigationssystems mit der Anzahl der Zielfahrten erhöht wird. Diese Aufgabe wird gemäß der Erfindung durch die kennzeichnenden Merkmale des Hauptanspruchs gelöst.

### Vorteile der Erfindung

Das erfindungsgemäße Verfahren mit den kennzeichnenden Merkmalen des Anspruchs 1 hat den Vorteil, daß am Ende einer jeden Zielfahrt die ermittelten Abweichungen zwischen dem eingegebenen und dem vom Navigationssystem ermittelten Fahrziel zur Nacheichung von Winkel- und Wegkennzahlen des Navigationsystems verwendet werden, um die Genauigkeit der Koppelnavigation zu optimieren. Dies ist besonders vorteilhaft bei Navigationseinrichtungen, deren Betriebsparameter wie beispielsweise der Deklinationswinkel oder die Größe und Richtung des fahrzeuginternen Magnetfeldes bei langfristiger Änderung zu Navigationsfehlern führen.

Durch die in den abhängigen Ansprüchen aufgeführten Maßnahmen sind vorteilhafte Weiterbildungen und Verbesserungen der im Hauptanspruch angegebenen Merkmale möglich. Eine besonders einfache und vorteilhafte Lösung besteht darin, daß zur Berechnung eines Korrekturwertes die direkte.

Entfernung des eingegebenen Fahrziels zu der von der Koppelnavigationseinrichtung ermittelten direkten Entfernung vom Ausgangspunkt ins Verhältnis gesetzt wird und daß zur Berechnung einer Winkelkorrektur die Winkelabweichung zwischen der Richtung des in den Speicher eingegebenen Fahrzieles und dem von der Koppelnavigationseinrichtung ermittelten Richtung vom Ausgangspunkt zur Entfernung des Fahrziels ins Verhältnis gesetzt wird.

### Zeichnung

Ein Ausführungsbeispiel der Erfindung ist in der Zeichnung dargestellt und in der nachfolgenden Beschreibung näher erläutert. Es zeigen Figur 1 ein Navigationssystem für ein Kraftfahrzeug im Blockschaltbild, Figur 2 die schematische Darstellung von Abweichungen einer eingegebenen und einer vom Navigationssystem ermittelten Zielfahrt, Figur 3 zeigt eine solche aus mehreren Etappen zusammengesetzte Zielfahrt in schematischer Darstellung und Figur 4 zeigt ein Flußdiagramm des Navigationsverfahrens mit der Nacheichung beim Erreichen des Fahrziels.

### Beschreibung des Ausführungsbeispiels

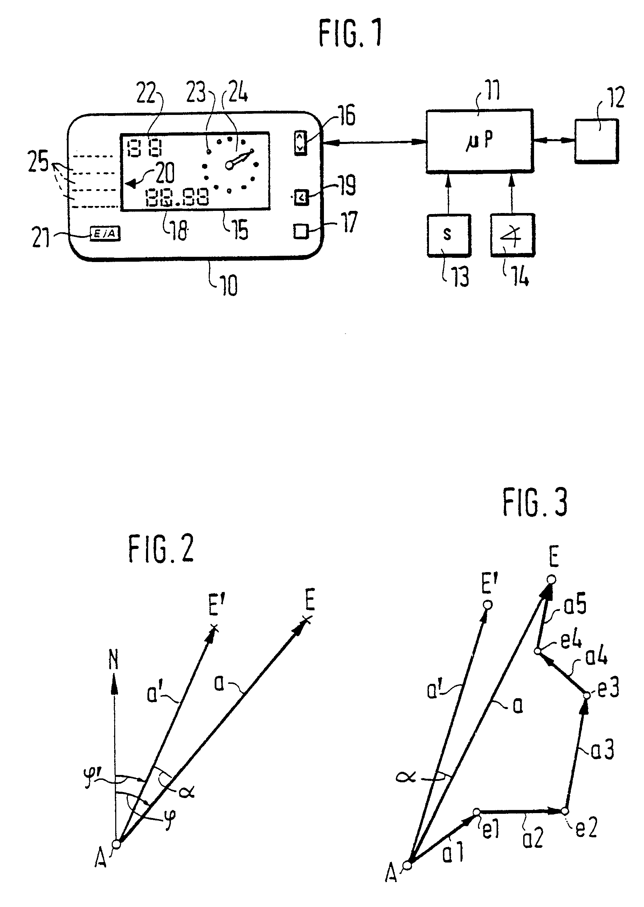

In Figur 1 ist ein Koppelnavigationssystem Für Kraftfahrzeuge dargestellt, mit dem der Fahrer durch Angabe von Zielrichtung und Luftlinienentfernung in einer fremder Umgebung das gewünschte Ziel finden kann (Zielfindungssystem). Es besteht aus einer Ein- und Ausgabeeinheit 10, einem Mikroprozessor 11 mit einem Datenspeicher 12 sowie aus einem Weggeber 13 und einem Fahrrichtungsgeber 14. Der Mikroprozessor 11 ist üblicherweise zusammen mit dem Datenspeicher 12 in der Ein- und Ausgabeeinheit 10 mit enthalten. Als Weggeber 13 können Impulsgeber eines Tachogenerators oder entsprechende Geber an den Fahrzeugrädern verwendet werden, die gegebenenfalls bereits im Fahrzeug vorhanden sind, beispielsweise für einen Fahrdatenrechner oder für ein Antiblockiersystem. Als Fahrrichtungsgeber ist ein Magnetometer bzw. ein elektronischer Kompass oder ein Drehwinkelsensor am Lenkrad bzw. zwei Drehwinkelsensoren an der nicht angetriebenen Achse oder ein Trägheitsnavigationssystem zu verwenden. Der Mikroprozessor 11 mit Peripherie und Datenspeicher 12 bilden das Kernstück des Navigationssystems. A Mikroprozessor 11 sind der Weggeber 13 und der Fahrrichtungsgeber 14 angeschlossen. Seine Aufgabe ist es, das Magnetometer anzusteuern, dessen Signale zu verarbeiten und einen Winkelwert zu bestimmen, der die Abweichung der Richtung der Fahrzeuglängsachse gegenüber der magnetischen Nordrichtung angibt. Weiterhin soll er aus den Impulssignalen des Weggebers 13 die Länge der vom Fahrzeug zurückgelegten Strecke berechnen. Mit Hilfe dieser Rechenergebnisse können bei zuvor eingegebener Ausgangsposition die Koordinaten der aktuellen Fahrzeugposition berechnet und damit die Richtung und Luftlinienentfernung zum eingegebenen Fahrziel bestimmt werden. Der Mikroprozessor 11 soll weiterhin den Status der Bedientasten in der Ein- und Ausgabeeinheit 10 überwachen, er führt die von den Bedientasten ausgelösten Steuer- und Eingabebefehle aus und steuert ferner die Ausgabe von Daten und Richtungspfeilen auf einer Flüssigkristallanzeige 15 der Einheit 10.

Die Bedienung des Navigationssystems erfolgt mit fünf Bedientasten. Mit einer Wippentaste 16 können Zahlenwerte in Richtung größer und kleiner auf der LCD 15 verändert werden. Eine progressive, getaktete Zeitsteuerung erlaubt es, den gewünschten Zahlenwert schnell anzulaufen. Mit der Betätigung einer Quittiertaste 14 wird jeweils der auf der LCD 15 angezeigte aktuelle Zahlenwert abgespeichert, der im unteren Bereich der LCD 15 z.B. auf einer 4-stelligen Sieben-Segment-Anzeige 18 erscheint. Mit einer Funktionswahltaste 19 erfolgt die Umschaltung des Navigationssystems innerhalb eines angebotenen Menüs, gemäß einer Beschriftung 25 auf dem linken Randbereich der Einheit 10, wobei die jeweils auf der LCD 15 angezeigten Informationen durch einen Pfeil 20 der LCD 15 in Höhe der Beschriftung 25 kenntlich gemacht werden. Ein weiterer Tastschalter 21 dient zum Ein- und Ausschalten des Koppelnavigationssystems. Eine zweistellige Sieben-Segmentanzeige 22 im oberen LCD-Bereich dient zur Kennzeichnung von 99 verschiedenen Zielvorgaben. Eine Rosette 23 der LCD 15 mit 16 verschiedenen unsichtbaren Pfeilsegmenten dient zur Richtungsinformation, wobei der angesteuerte Richtungspfeil 24 entweder die Nordrichtung oder die Richtung des anzufahrenden Zieles darstellt.

Das Navigationssystem ist so konzipiert, daß es in jedes Kraftfahrzeug eingebaut werden kann. Zur Kalibrierung des Navigationssystems ist es erforderlich, mit einer Zielfahrt mit bekannter Streckenlänge und Richtung gegenüber der geografischen Nordrichtung, die einer entsprechenden Karte entnommen werden kann, eine Wegkennzahl und eine Winkelkennzahl zu ermitteln und diese im Datenspeicher 12 abzulegen. Sind Weg- und Winkelkennzahl Bereits bekannt, so können diese Werte auch direkt, also ohne Zielfahrt, programmiert werden. Dadurch ist es beispielsweise möglich, in einfacher Weise den Wechsel von Sommer- und Winterreifen zu berücksichtigen. Dafür können zusätzliche Schalter an der Einheit 10 vorgesehen sein. Dies gilt auch für eine Umschaltung vom metrischen auf ein imperielles Meßsystem.

Soll nun mit dem Navigationssystem eine Navigationsfahrt durchgeführt werden, so muß das anzufahrende Fahrziel zunächst nach Richtung und Entfernung in die Ein- und Ausgabeeinheit 10 eingegeben und gespeichert werden. Zu diesem Zweck wird zunächst über die Taste 21 das Navigationssystem eingeschaltet und mit der Funktionswahltaste 19 wird der Pfeil 20 auf die Position "Eingabe" gebracht, indem der Pfeil 20 mit jeder Betätigung der Taste 19 zwischen den Funktionen "Navigation, Eingabe und Kompass" weiterschaltet. In Figur 2 ist die direkte Entfernung zwischen dem Ausgangspunkt A und dem Endziel E der Zielfahrt als Etappe a dargestellt. Zur Eingabe dieser Etappe in das Navigationssystem wird nun mit der Wippentaste 16 zunächst die Kennzahl dieser Etappe auf der oberen Anzeige 22 der LCD 15 bestimmt. Bei Betätigen der Wippentaste 16 wird hierzu über einen Zähler die Etappenzahl fortlaufend hoch oder heruntergezählt. Sobald die gewünschte Etappenzahl auf der zweistelligen Sieben-Segment-Anzeige 22 erscheint, wird diese durch Betätigen der Quittungstaste 17 im Datenspeicher 12 der nun folgenden Etappeneingabe zugeordnet.

Die einzugebende Etappe kann dabei von jeder beliebigen Straßenkarte eingegeben werden. Zu diesem Zweck muß zunächst der Maßstab der Straßenkarte in das Navigationssystem eingegeben werden. Dies erfolgt dadurch, daß der Maßstab durch Betätigen der Wippentaste 16 im unteren Bereich der LCD durch die vierstellige Sieben-Segment-Anzeige 18 eingestellt wird. Sobald dies geschehen ist, wird durch erneutes Betätigen der Quittungstaste 17 dieser Maßstab im Datenspeicher 12 abgelegt. Jetzt kann mit einem Stabmaß auf der Karte die direkte Entfernung des Fahrziels E vom Ausgangspunkt A abgelesen und durch erneutes Betätigen der Wippentaste 16 kann diese Entfernung auf der vierstelligen Sieben-Segment-Anzeige 18 18 eingegeben werden. Mit Betätigen der Quittungstaste 17 wird sodann der eingegebene Wert im Datenspeicher 12 abgelegt. Nunmehr muß noch der Winkel φ der Etappe a zur Nordrichtung mit einer Winkelmeßscheibe aus der vorhandenen Straßenkarte abgelesen werden. Dieser Wert wird nun ebenfalls durch Betätigen der Wippentaste 16 auf der vierstelligen Sieben-Segment-Anzeige 18 eingestellt und sodann durch Betätigen der Quittungstaste 17 in den Datenspeicher 12 gegeben. Gleichzeitig wird damit die Etappenkennzahl auf der zweistelligeh Anzeige 22 um 1 weitergeschaltet. Sollen jedoch keine weiteren Etappen eingegeben werden, so wird nun durch Betätigen der Funktionswahltaste 19 zunächst auf das System Kompass umgeschaltet, wobei der Pfeil 20 einen Schritt nach unten springt und der Richtungspfeil 24 in der Rosette 23 nunmehr die Nordrichtung anzeigt.

Durch erneutes Betätigen der Funktionswahltaste 19 wird nun das Navigationssystem auf die Zielnavigation der eingegebenen etappe a mit dem Endziel E umgeschaltet. Der Richtungspfeil 24 auf der Rosette 23 zeigt nunmehr die Richtung an, in der das eingegebene Fahrziel E liegt. Außerdem wird auf der vierstelligen Sieben-Segment-Anzeige 18 die direkte Entfernung des Ausgangspunktes A zum Fahrziel E angezeigt. Sobald sich nun das Fahrzeug in Bewegung setzt, werden vom Weggeber 13 und vom Fahrrichtungsgeber 14 Signale abgegeben, mit denen im Mikroprozessor 11 fortlaufend der augenblickliche Standort des Fahrzeugs ermittelt und die jeweilige Entfernung und Richtung zum eingegebenen Fahrziel E berechnet wird. Dabei werden diese Daten laufend auf der LCD 15 angezeigt. Das Programm des Mikroprozessors 11 ist so ausgelegt, daß bei einer Annäherung des Fahrzeugs an das Fahrziel E bis auf 3% der tatsächlich zurückgelegten Entfernung die Zielnavigationsanzeige umgeschaltet wird, wobei nunmehr sämtliche Richtungspfeile 24 der Rosette 23 blinken. Der Fahrer ist jetzt seinem Ziel so nahe, daß er es nunmehr aufgrund einer begrenzten Zielgenauigkeit des Systems ohne Navigationshilfe selbst ansteuern kann.

Wie Figur 2 zeigt, kann dabei der vom Koppelnavigationssystem mit dem Weggeber 13 und dem Fahrrichtungsgeber 14 aufgrund der zurückgelegten Fahrstrecke des Fahrzeugs ermittelte Standort am Endziel E' vom eingegebenen Endziel E nach Entfernung a' und/oder Richtung $\varphi'$ abweichen. Diese Abweichungen werden nun beim Erreichen des Endziels E' durch Betätigen der Quittungstaste 17 zur Berechnung von Korrekturwerten erfaßt. Die daraus errechneten Korrekturwerte werden gespeichert und die nachfolgenden, von der Koppelnavigationseinrichtung ermittelten Daten über den jeweiligen Standort des Fahrzeugs können mit diesen Korrekturwerten korrigiert werden. Als Korrekturwerte können die Werte $F1 = K1 \times a/a'$ für die Wegkennzahl und $F2 = K2 \times \alpha$ für die Richtungskennzahl ermittelt werden, wobei zur Berechnung des Korrekturwertes F1 die direkte Entfernung a des eingegebenen Fahrziels E zu der von der Koppelnavigationseinrichtung ermittelten direkten Entfernung a' vom Ausgangspunkt A ins Verhältnis gesetzt wird. Der Korrekturwert F2 ergibt sich aus der Winkelabweichung $\alpha = \varphi - \varphi'$ zwischen der Richtung des im Datenspeicher 12 eingegebenen Fahrziels E und der von der Koppelnavigationseinrichtung ermittelten Richtung $\varphi'$ vom Ausgangspunkt A. Mit den Faktoren $K1 < 1$ und $K2 < 1$ können die Abweichungen und die daraus ermittelten Korrekturen gewichtet werden. Dabei ist im Programm des Mikroprozessors 11 vorgesehen, die ermittelten Abweichungen zunächst mit einem K1 bzw. K2 von 20% zu wichten. Treten jedoch mehrfach hintereinander Abweichungen mit gleicher Tendenz auf, so wird der entsprechende Faktor K nach jeder weiteren Zielfahrt um 10% erhöht. Außerdem kann vorgesehen werden, den Faktor K2 für die Winkelkorrektur mit zunehmender Fahrstrecke zu erhöhen, z.B. um 10% je 10 km Fahrstrecke.

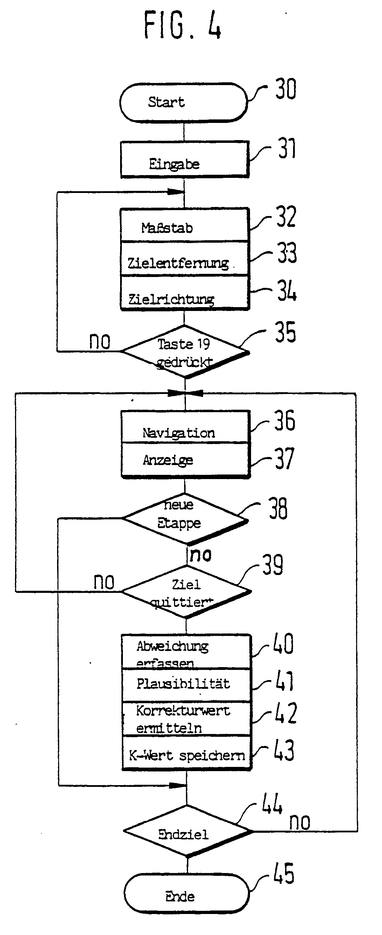

Wie Figur 3 zeigt, kann die zwischen dem Ausgangspunkt A und einem Endziel E liegende Fahrstrecke auch in mehrere Etappen mit voneinander abweichenden Richtungen aufgegliedert sein. Die Einzeletappen können dabei auch mehreren Karten mit unterschiedlichen Maßstäben entnommen werden. In diesem Fall müssen vor Fahrtantritt die einzelnen Etappenziele e1 bis e4 und E nacheinander über die Ein- und Ausgabeeinheit 10 in den Datenspeicher 12 des Navigationssystems eingegeben werden. Mit Hilfe des Flußdiagramms in Figur 4 soll dabei erläutert werden, daß wahlweise beim Erreichen eines jeden Etappenziels durch Betätigen der Quittungstaste 17 die Abweichungen des eingegebenen vom ermittelten Etappenziel e1 bis e4 erfaßt und verarbeitet werden bzw. daß erst beim Erreichen des Endzieles E durch die Betätigung der Quittungstaste 17 die Abweichungen zur Berechnung der Korrekturwerte erfaßt und verarbeitet werden.

Mit Betätigung des Ein- und Ausschalters 21 wird im Schritt 30 des Flußdiagramms das Navigationssystem eingeschaltet und durch Betätigen der Funktionswahltaste 19 im Schritt 31 die Eingabe der Etappen a1 bis a5 vorbereitet. Nach entsprechender eingabe des Maßstabes der verwendeten Straßenkarte in Schritt 32 wird nun die erste Etappe a1 eingegeben, indem im Schritt 33 die Zielentfernung des Etappenziels e1 und im Schritt 34 deren Zielrichhtung in bezug auf die Nordrichtung eingegeben wird. Im Schritt 35 wird sodann abgewartet, ob weitere Etappen eingelesen werden sollen. Für die Eingabe der folgenden Etappen a2 bis a5 wird folglich die Programmschleife mit den Schritten 32 bis 35 wiederholt durchlaufen. Ist schließlich mit der Etappe a5 das Endziel E eingegeben, so wird durch zweifaches Betätigen der Funktionswahltaste 19 im Schritt 36 die Zielnavigation aktiviert und im Schritt 37 werden Richtung und Entfernung des ersten Etappenziels e1 auf der LCD 15 angezeigt. Im Programmschritt 38 wird nun geprüft, ob ein anderes Etappenziel durch Betätigung der Wippentaste 16 aufgerufen wurde. Solange dies nicht der Fall ist, wird die Navigation und die Anzeige über eine Programmschleife mit den Schritten 36 bis 39 fortgesetzt. Ist nun das erste Etappenziel e1 erreicht worden, so wird dies durch eine Betätigung der Quittungstaste 17 quittiert, da sonst bei der Weiterfahrt die Navigationsanzeige weiterhin Entfernung und Richtung des angefahrenen Etappenzieles e1 ausgibt. Sodann erfolgt im Schritt 40 zunächst die Erfassung der Richtungs- und Entfernungsabweichungen zwischen dem eingegebenen Etappenziel e1 und dem vom Navigationssystem ermittelten Standort des Fahrzeugs. Durch eine Plausibilitätskontrolle wird nun in Schritt 41 geprüft, ob die ermittelten Abweichungen im Rahmen des Möglichen liegen oder z.B. durch fehlerhafte Eingabe oder anderer Umstände (worst-case-constellations) unberücksichtigt bleiben sollen. Im Schritt 42 werden schließlich die entsprechenden Korrekturwerte F1 und F2 ermittelt und im Schritt 43 werden diese Werte im Datenspeicher 12 gespeichert und für die Korrektur aller nachfolgend von der Koppelnavigationseinrichtung ermittelten Weg- und Richtungsdaten verwendet. Im Schritt 44 wird geprüft, ob noch weitere Etappenziele eingegeben worden sind. Da dies für Figur 3 zutrifft, wird nunmehr über eine Programmschleife das nächste Etappenziel e2 über die LCD-Anzeige 15 ausgegeben und die Programmschritte 36 bis 44 werden nun erneut durchlaufen. Das gleiche wiederholt sich anschließend für die Etappen a3 bis a5. Am Ende der letzten Etappe a5 wird im Programmschritt 44 erkannt, daß das Endziel E nunmehr erreicht ist. Im Schritt 45 wird folglich das Navigationsprogramm beendet und der Mikroprozessor 11 schaltet selbsttätig auf die Kompass-Anzeige um. Sollte dem Benutzer die Möglichkeit gegeben werden zu entscheiden, ob erst beim Erreichen des Endzieles eine Korrektur durchgeführt werden soll, so könnte das über die Zeitdauer des Tastendrucks der Quittungstaste 17 beim Erreichen der Etappenziele e1 bis e4 gesteuert werden. Eine nur kurze Betätigung der Taste 17 könnte das Zeichen dafür sein, daß dort keine Korrektur erwünscht ist.

Im Rahmen der vorliegenden Erfindung ist es auch möglich, Ein- und Ausgibeeinheiten zu verwenden, mit denen vor Fahrantritt von einer Straßenkarte die gewünschte Fahrroute mit einem Griffel nachgefahren wird, wobei die Bewegungen des Griffels elektrisch erfaßt und gespeichert werden. Die so eingegebene Fahrroute wird auf einer Anzeige wiedergegeben, auf der ferner jeweils der augenblickliche Standort des Fahrzeugs mit eingeblendet wird (DE-OS 33 41 679). Auch hierbei ist nach einer Navigationsfahrt durch Erfassung der Abweichungen zwischen den eingegebenen Werten und den von der Koppelnavigationsvorrichtung ermittelten Werten eine Korrektur des Navigationssystems für die nachfolgenden Fahrten durchzuführen.

Mit dem erfindungsgemäßen Verfahren werden die von der Koppelnavigation herührenden Fehler nicht nur eliminiert, sondern zur Berechnung von Korrekturparametern verwendet. Mit Hilfe dieser Korrekturparameter werden die Systemkennzahlen wie Wegkennzahl und Richtungskennzahl des Navigationssystems ständig aktualisiert, so daß mit zunehmendem Einsatz des Navigationssystems schließlich die Fehler schrittweise minimiert werden. Durch Plausibilitätskontrollen kann schließlich verhindert werden, daß fehlerhafte Eingaben bzw. fehlerhaft eingegebene Maßstäbe eine falsche Korrektur des Navigationssystems nach sich ziehen.

## Ansprüche

1. Navigationsverfahren für Fahrzeuge mit einer Anzeigevorrichtung zur Darstellung von Fahrzielen nach Richtung und Entfernung, in dem die Zieldaten vor Fahrantritt über eine Eingabevorrichtung in einen Speicher eingegeben werden und wobei während der Fahrt durch eine Koppelnavigationseinrichtung fortlaufend der augenblickliche Standort des Fahrzeugs ermittelt und in bezug auf das angewählte Fahrziel angezeigt wird und bei dem bei Erreichen des Fahrziels Abweichungen des von der Koppelnavigationseinrichtung ermittelten Standortes vom eingegebenen Fahrziel korrigiert werden, wobei die Abweichungen von der Koppelnavigationseinrichtung zur Berechnung von Korrekturwerten erfaßt werden, die errechneten Korrekturwerte gespeichert und die nachfolgenden, von der Koppelnavigationseinrichtung ermittelten Daten über den jeweiligen Standort des Fahrzeugs mit den Korrekturwerten korrigiert werden, dadurch gekennzeichnet, daß die erfaßten Abweichungen zur Ermittlung der Korrekturwerte (F1, F2) mit je einem Faktor (K < 1) gewichtet werden, von denen mindestens einer bei mehrfach hintereinander auftretenden Abweichungen mit gleicher Tendenz nach jeder weiteren Zielfahrt um einen vorgegebenen Prozentsatz des Korrekturwertes (F1, F2) erhöht wird.

2. Navigationsverfahren nach Anspruch 1, dadurch gekennzeichnet, daß der Wichtungsfaktor (K) bei einer erstmals auftretenden Abweichung mit 20% des Korrekturwertes (F1, F2) gewählt und mit mehrfach hintereinander auftretender Abweichung um je 10% erhöht wird.

3. Navigationsverfahren nach einem der vorherigen Ansprüche, dadurch gekennzeichnet, daß die zischen dem Ausgangspunkt (A) und dem Fahrziel (E) liegende Fahrstrecke in mehrere Etappen (a1 bis a5) mit voneinander abweichenden Richtungen aufgegliedert und vor Fahrtantritt als Etappenziele (e1 bis e4, E) in den Speicher (12) eingegeben werden.

4. Navigationsverfahren nach Anspruch 3, dadurch gekennzeichnet, daß bei mehreren nacheinander anzufahrenden Etappenzielen (e1 bis e4, E) beim Erreichen eines jeden Etappenziels durch Betätigen einer Quittungstaste (17) die Abweichungen des eingegebenen vom ermittelten Etappenziel erfaßt und verarbeitet werden.

5. Navigationsverfahren nach einem der vorherigen Ansprüche, dadurch gekennzeichnet, daß beim Erreichen des Endzieles (E) durch Betätigen einer Quittungstaste (17) die Abweichungen zur Berechnung der Korrekturwerte erfaßt und verarbeitet werden.

6. Navigationsverfahren nach einem der vorherigen Ansprüche, dadurch gekennzeichnet, daß zur Berechnung eines Korrekturwertes (F1) die direkte Entfernung (a) des eingegebenen Fahrziels (E) zu der von der Koppelnavigationseinrichtung ermittelten direkten Entfernung (a') vom Ausgangspunkt (A) ins Verhältnis gesetzt wird.

7. Navigationsverfahren nach einem der vorherigen Ansprüche, dadurch gekennzeichnet, daß zur Ermittlung eines Korrekturwertes (F2) die Winkelabweichung ($\alpha$) zischen der Richtung des im Speicher eingegebenen Fahrziels (E) und der von der Koppelnavigationseinrichtung ermittelten Richtung vom Ausgangspunkt (A) bestimmt wird.

8. Navigationsverfahren nach einem der vorherigen Ansprüche, dadurch gekennzeichnet, daß vor der Ermittlung der Korrekturwerte (F1, F2) die erfaßten Abweichungen mit Plausibilitätswerten verglichen werden.

## Claims

1. Method of navigation for vehicles having a display device for representing travel destinations by direction and distance, in which the destination data are input before commencing a journey via an input device into a memory and in which, during the journey, the instantaneous location of the vehicle is continuously determined by a dead-reckoning navigation device and displayed with respect to the selected travel destination and with which, on reaching the travel destination, deviations of the location determined by the dead-reckoning navigation device from the input travel destination are corrected, the deviations being sensed by the dead-reckoning navigation device for the calculation of correction values, the calculated correction values stored and the subsequent data of the respective location of the vehicle, determined by the dead-reckoning navigation device, corrected by the correction values, characterised in that the sensed deviations for determining the correction values (F1, F2) are each weighted with a factor (K < 1), of which at least one is increased by a predetermined percentage of the correction value (F1, F2) in the event of repeated successively occurring deviations with the same tendency after each further destination journey.

2. Method of navigation according to Claim 1, characterised in that the weighting factor (K) is chosen at 22% of the correction value (F1, F2) in the case of a deviation occurring for the first time and is increased by 10% each time with a repeated successively occurring deviation.

3. Method of navigation according to one of the preceding claims, characterised in that the route lying between the starting point (A) and the travel destination (E) is divided up into a plurality of stages (a1 to a5) having directions deviating from one another and, before commencing a journey, are input into the memory (12) as stage destinations (e1 to e4, E).

4. Method of navigation according to Claim 3, characterised in that, in the case of a plurality of stage destinations (e1 to e4, E) to be driven to successively, the deviations of the input stage destination from the determined stage destination are sensed and processed upon reaching each stage destination by operating an acknowledgement button (17).

5. Method of navigation according to one of the preceding claims, characterised in that, upon reaching the final destination (E), the deviations for calculation of the correction values are sensed and processed by operating an acknowledgement button (17).

6. Method of navigation according to one of the preceding claims, characterised in that, for calculation of a correction value (F1), the direct distance (a) of the input travel destination (E) from the starting point (A) is set in relation to the direct distance (a') determined by the dead-reckoning navigation device from the starting point (A).

7. Method of navigation according to one of the preceding claims, characterised in that, for the determination of a correction value (F2), the anglar deviation ($\alpha$) between the direction of the travel destination (E) input in the memory from the starting point (A) and the direction determined by the dead-reckoning navigation device from the starting point (A) is determined.

8. Method navigation according to one of the preceding claims, characterised in that, before determining the correction values (F1, F2), the sensed deviations are compared with plausibility values.

## Revendications

1. Procédé de navigation pour des véhicules, comportant un dispositif d'affichage pour représenter les destinations par la direction et l'éloignement, procédé selon lequel on introduit en mémoire les données de la destination avant d'effectuer le parcours et pendant le parcours on détermine instantanément l'endroit du véhicule, de manière continue par l'intermédiaire d'une installation de couplage de navigation et on affiche cette position par rapport à la destination choisie et lorsqu'on atteint la destination on corrige les différences entre l'emplacement déterminé par l'installation de navigation couplée et la destination introduite, les différences étant saisies par l'installation de navigation couplée pour calculer des grandeurs de correction, on met en mémoire les grandeurs de correction et on corrige les données suivantes fournies par l'installation de navigation couplée, concernant l'emplacement respectif du véhicule en utilisant les grandeurs de correction, procédé caractérisé en ce qu'on pondère les différences saisies pour déterminer les grandeurs de correction (F1, F2) avec chaque fois un coefficient (K < 1) parmi lesquels au moins un coefficient, en cas de différences multiples, se répétant successivement et présentant la même tendance après chaque autre déplacement vers une destination, est augmenté d'un pourcentage prédéterminé de la valeur de correction (F1, F2).

2. Procédé de navigation selon la revendication 1, caractérisé en ce que le coefficient de pondération (K) dans le cas d'une différence se produisant la première fois, est choisi égal à 20% de la valeur de la correction (F1, F2) et il est augmenté chaque fois de 10% pour les différences multiples qui se produisent successivement.

3. Procédé de navigation selon l'une des revendications précédentes, caractérisé en ce que la trajectoire comprise entre le point de départ (A) et la destination (E) est subdivisée en plusieurs étapes (a1-a5) avec des directions différentes les unes des autres et ces étapes sont mises dans la mémoire (12) comme but d'étape (e1-e4, E) avant le début du déplacement.

4. Procédé de navigation selon la revendication 3, caractérisé en ce que dans le cas de plusieurs buts d'étapes mises en marche les unes après les autres à atteindre (e1-e4, E), à la fin de chaque étape, on saisit les déviations de la fin d'étape déterminée en actionnant une touche d'acquittement (17) et on procède au traitement.

5. Procédé de navigation selon l'une des revendications précédentes, caractérisé en ce que lorsqu'on atteint la destination (E) on saisit les différences pour calculer les valeurs de correction en agissant sur une touche d'acquittement (17) et on procède au traitement.

6. Procédé de navigation selon l'une des revendications précédentes, caractérisé en ce que pour calculer une valeur de correction (F1) on fait le rapport entre la distance directe (a) de la destination (E) introduite et la distance (a') du point de destination (A), cette dernière distance étant fournie par l'installation de navigation couplée.

7. Procédé de navigation selon l'une des revendications précédentes, caractérisé en ce que pour déterminer une valeur de correction (F2) on détermine la déviation angulaire ($\alpha$) entre la direction de la destination (E) mise dans la mémoire et la direction du point de destination (A) déterminée par l'installation de navigation couplée.

8. Procédé de navigation selon l'une des revendications précédentes, caractérisé en ce que qu'on compare les différences saisies avant de déterminer les valeurs de correction (F1, F2) en utilisant des valeurs plausibles.

# FIG. 1

22 23 24

25

16

19

17

21 E/A

20

88.88

18 15

10

11

μP

12

s

13

14

# FIG. 3

# FIG. 2

E'  E

N

a'  a

φ'

α

φ

A

E'  E

a5

e4  a4

a'  a  e3

α  a3

a1  e1  a2  e2

A

# FIG. 4

```
        ╭─────────╮
        │  Start  │ ────── 30
        ╰────┬────╯
             │
        ┌─────────┐
        │ Eingabe │ ────── 31
        └────┬────┘
             │
        ┌──────────────┐
        │   Maßstab    │ ────── 32
        ├──────────────┤
        │ Zielentfernung│ ────── 33
        ├──────────────┤
        │ Zielrichtung │ ────── 34
        └──────┬───────┘
               │
no ◄────── ◇ Taste 19 ◇ ────── 35
          gedrückt
               │
        ┌──────────────┐
        │  Navigation  │ ────── 36
        ├──────────────┤
        │   Anzeige    │ ────── 37
        └──────┬───────┘
               │
           ◇ neue ◇ ────── 38
           Etappe
             │ no
           ◇ Ziel ◇ ────── 39
no ◄─────  quittiert
               │
        ┌──────────────┐
        │  Abweichung  │ ────── 40
        │  erfassen    │
        ├──────────────┤
        │ Plausibilität│ ────── 41
        ├──────────────┤
        │ Korrekturwert│ ────── 42
        │  ermitteln   │
        ├──────────────┤
        │K-Wert speichern│ ──── 43
        └──────┬───────┘
               │
        ◇ Endziel ◇ ────── 44  no
               │
        ╭─────────╮
        │   Ende  │ ────── 45
        ╰─────────╯
```